# EUROPÄISCHE PATENTSCHRIFT

(11) **EP 1 916 421 B1**
(45) Veröffentlichungstag und Bekanntmachung des Hinweises auf die Patenterteilung: **09.11.2016**
(21) Anmeldenummer: 07018446.0
(22) Anmeldetag: 20.09.2007
(51) Int. Cl.: B60W 10/08, B60W 20/00, B60W 10/30, B60K 6/36, B60K 6/383, B60K 6/405, B60K 6/48, B60K 6/547, F04C 2/10, B60W 10/06, F04C 15/00, F16H 57/04

(54) **Pumpenantriebsanordnung**
Pump drive assembly
Agencement d'entraînement de pompe

(30) Priorität: 16.10.2006 DE 102006048807
(43) Veröffentlichungstag der Anmeldung: 30.04.2008
(73) Patentinhaber: Schaeffler Technologies AG & Co. KG, 91074 Herzogenaurach (DE)
(72) Erfinder: Agner, Ivo, 77815 Bühl (DE); Reitz, Dierk, 76530 Baden-Baden (DE); Berger, Reinhard, Dr., 77815 Bühl (DE); Lamers, Johannes, 77880 Sasbach (DE)

(56) Entgegenhaltungen:
- EP-A2- 1 216 871
- DE-C1- 10 160 466
- JP-A- 2000 335 263
- JP-A- 2003 336 725
- JP-A- 2005 030 517
- US-A- 5 474 428
- US-A- 5 799 744
- US-A- 5 823 282
- US-A1- 2004 112 654

## Beschreibung

Die Erfindung betrifft eine Pumpenantriebsanordnung mit einem Pumpenantriebselement, das durch eine erste oder eine zweite Antriebseinrichtung angetrieben ist. Derartige Pumpenantriebsanordnungen sind beispielsweise aus JP 2000 335263 A und DE 101 60 466 C1 bekannt. Die Erfindung betrifft des Weiteren einen Hybridfahrzeugantriebsstrang mit einer elektrischen Maschine, einer Brennkraftmaschine und einem Getriebe, insbesondere einem Doppelkupplungsgetriebe, mit mindestens einer Getriebeeingangswelle und mit einer vorab beschriebenen Pumpenantriebsanordnung.

Aufgabe der Erfindung ist es, eine Pumpenantriebsanordnung gemäß dem Oberbegriff des Anspruchs 1 zu schaffen, die auf einfache Art und Weise in unterschiedlichen Betriebszuständen der beiden Antriebseinrichtungen einen ausreichenden Antrieb einer mit der Pumpenantriebsanordnung angetriebenen Pumpe sicherstellt und bei der die hierfür vorgesehenen Freilaufeinrichtungen von Querkräften entlastet werden.

Die Aufgabe ist bei einer Pumpenantriebsanordnung mit einem Pumpenantriebselement, das durch eine erste oder eine zweite Antriebseinrichtung angetrieben ist, durch die Merkmale von Anspruch 1 gelöst. Durch die erfindungsgemäße Pumpenantriebsanordnung wird, zum Beispiel bei Hybridanwendungen, in denen eine elektrische Maschine, insbesondere ein Elektromotor, nicht zwischen einer Brennkraftmaschine, insbesondere einem Verbrennungsmotor, und einem Getriebe angeordnet ist, sondern an eine Getriebeeingangswelle gekoppelt ist, in unterschiedlichen Betriebszuständen der beiden Antriebseinrichtungen ein ausreichender Pumpenantrieb sichergestellt, und zwar insbesondere auch dann, wenn die Brennkraftmaschine, insbesondere der Verbrennungsmotor, abgeschaltet ist und die elektrische Maschine, insbesondere der Elektromotor, läuft.

Ein bevorzugtes Ausführungsbeispiel der Pumpenantriebsanordnung ist dadurch gekennzeichnet, dass die beiden Freilaufeinrichtungen, relativ zu dem Kopplungselement, in entgegengesetzten Drehrichtungen wirksam sind. Vorzugsweise sind die Freilaufeinrichtungen so geschaltet, dass jeweils die schnellere der beiden Drehzahlen, also entweder die Drehzahl der ersten Antriebseinrichtung oder die Drehzahl der zweiten Antriebseinrichtung, eine mit der Pumpenantriebsanordnung angetriebene Pumpe antreibt.

Erfindungsgemäß ist die Pumpenantriebsanordnung dadurch gekennzeichnet, dass die erste Freilaufeinrichtung dann blockiert, wenn sich die erste Antriebseinrichtung schneller als das Kopplungselement dreht. Dann wird das Drehmoment der ersten Antriebseinrichtung über das Kopplungselement auf das Pumpenantriebselement übertragen.

Erfindungsgemäß ist die Pumpenantriebsanordnung dadurch gekennzeichnet, dass die zweite Freilaufeinrichtung dann blockiert, wenn sich die zweite Antriebseinrichtung schneller als das Kopplungselement dreht. Dann wird das Drehmoment der zweiten Antriebseinrichtung über das Kopplungselement auf das Pumpenantriebselement übertragen.

Erfindungsgemäß ist die Pumpenantriebsanordnung dadurch gekennzeichnet, dass die zweite Antriebseinrichtung drehfest mit einer Getriebeeingangswelle, insbesondere einer Getriebehohlwelle, verbunden ist. Die erste Antriebseinrichtung ist über die erste Freilaufeinrichtung und das Kopplungselement mit der Getriebeeingangswelle koppelbar.

Ein weiteres bevorzugtes Ausführungsbeispiel der Pumpenantriebsanordnung ist dadurch gekennzeichnet, dass die Getriebeeingangswelle drehfest mit einer Führungseinrichtung für ein Kühl- und/oder Schmiermedium verbunden ist, die relativ zu dem Kopplungselement drehbar gelagert ist. Vorzugsweise sind in radialer Richtung zwischen der Getriebeeingangswelle und der Führungseinrichtung Durchtrittskanäle für das Kühl- und/oder Schmiermedium vorgesehen. Die drehbare Lagerung erfolgt vorzugsweise durch eine in die zweite Freilaufeinrichtung integrierte Gleitlagereinrichtung.

Erfindungsgemäß ist die Pumpenantriebsanordnung dadurch gekennzeichnet, dass die erste Antriebseinrichtung eine Antriebshülse umfasst, die über die erste Freilaufeinrichtung drehfest mit dem Kopplungselement verbindbar beziehungsweise verbunden ist. Die Antriebshülse ist vorzugsweise als Blechteil ausgeführt und koaxial zu einer beziehungsweise der Getriebeeingangswelle angeordnet.

Erfindungsgemäß ist die Pumpenantriebsanordnung dadurch gekennzeichnet, dass die Antriebshülse, durch eine Lagereinrichtung, insbesondere eine Gleitlagereinrichtung, querkraftfrei an dem Kopplungselement gelagert ist. Dadurch werden die Freilaufeinrichtungen von Querkräften entlastet.

Ein weiteres bevorzugtes Ausführungsbeispiel der Pumpenantriebsanordnung ist dadurch gekennzeichnet, dass das Kopplungselement drehfest mit dem Pumpenantriebselement verbunden ist. Bei dem Pumpenantriebselement handelt es sich zum Beispiel um ein Pumpenantriebszahnrad. Das Kopplungselement kann zum Beispiel durch eine kraftschlüssige, insbesondere reibschlüssige, Verbindung mit dem Pumpenantriebselement verbunden sein.

Ein weiteres bevorzugtes Ausführungsbeispiel der Pumpenantriebsanordnung ist dadurch gekennzeichnet, dass ein von einer mit dem Pumpenantriebselement angetriebenen Pumpe erzeugter Volumenstrom mittels einer Saugdrosselung geregelt wird. Die Saugdrosselung dient dazu, die angetriebene Pumpe bedarfsgerecht mit Kühl- und/oder Schmiermedium zu versorgen.

Erfindungsgemäß ist die Pumpenantriebsanordnung dadurch gekennzeichnet, dass das Kopplungselement eine Kopplungshülse mit einem ersten axialen Abschnitt und einem zweiten axialen Abschnitt umfasst. Vorzugsweise haben die beiden axialen Abschnitte unterschiedlich große Durchmesser.

Erfindungsgemäß ist die Pumpenantriebsanordnung dadurch gekennzeichnet, dass der erste axiale Abschnitt mit der ersten Freilaufeinrichtung und der zweite axiale Abschnitt mit der zweiten Freilaufeinrichtung zusammenwirkt. Vorzugsweise sind die beiden axialen Abschnitte durch einen Verbindungsabschnitt einstückig miteinander verbunden.

Die Erfindung betrifft des Weiteren einen Hybridfahrzeugantriebsstrang mit einer elektrischen Maschine, einer Brennkraftmaschine und einem Getriebe, insbesondere einem Doppelkupplungsgetriebe, mit mindestens einer Getriebeeingangswelle und mit einer vorab beschriebenen Pumpenantriebsanordnung. Die erfindungsgemäße Pumpenantriebsanordnung ist mit beliebigen Getriebetypen, die eine Pumpe, insbesondere eine Ölpumpe, benötigen, kombinierbar. Die erfindungsgemäße Pumpenantriebsanordnung eignet sich insbesondere für die folgenden Anwendungen: Handschaltgetriebe mit Schmierölpumpe; Doppelkupplungsgetriebe mit Kurbelwellenstartergenerator oder Riemenstartergenerator; Automatikgetriebe mit Ölversorgung im Abschleppbetrieb; Automatikgetriebe; Doppelkupplungsgetriebe; CVT-Getriebe; Hybride mit hydraulischer Steuerung und Druckspeicher, der die Druckversorgung im Stillstand des Fahrzeugs gewährleistet, um einen Stopp-Start zu ermöglichen.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: die Darstellung eines Halbschnitts durch einen Antriebsstrang mit einer erfindungsgemäßen Pumpenantriebsanordnung;
- Figur 2: eine vergrößerte Darstellung der Pumpenantriebsanordnung aus Figur 1 und
- Figur 3: einen Ablaufplan für den Betrieb der in den Figuren 1 und 2 dargestellten Pumpenantriebsanordnung.

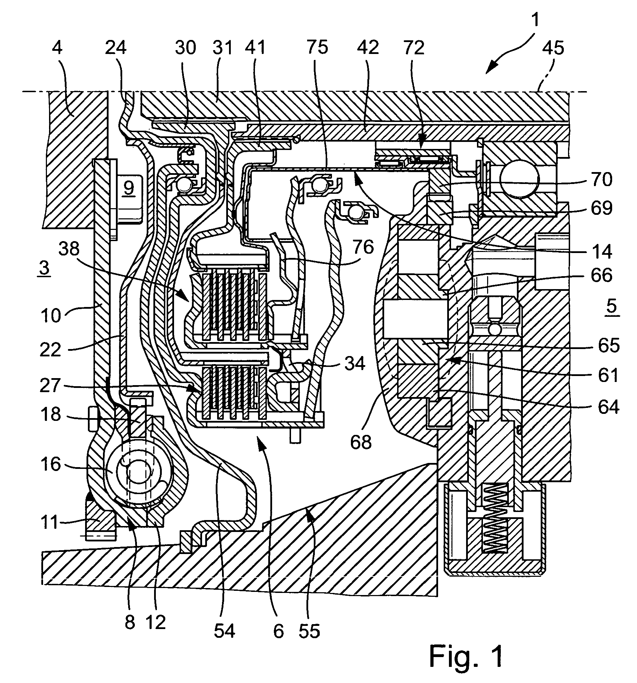

In Figur 1 ist ein Teil eines Antriebsstrangs 1 eines Kraftfahrzeugs dargestellt. Zwischen einer Antriebseinheit 3, insbesondere einer Brennkraftmaschine, von der eine Kurbelwelle 4 ausgeht, und einem Getriebe 5 ist eine nasslaufende Doppelkupplung 6 in Lamellenbauweise angeordnet. Zwischen die Antriebseinheit 3 und die Doppelkupplung 6 ist eine Drehschwingungsdämpfungseinrichtung 8 geschaltet. Bei der Drehschwingungsdämpfungseinrichtung 8 handelt es sich um ein Zweimassenschwungrad.

Die Kurbelwelle 4 der Brennkraftmaschine 3 ist über eine Schraubverbindung 9 fest mit einem Eingangsteil 10 der Drehschwingungsdämpfungseinrichtung 8 verbunden. Das Eingangsteil 10 der Drehschwingungsdämpfungseinrichtung 8 hat im Wesentlichen die Gestalt einer sich in radialer Richtung erstreckenden Kreisringscheibe, an die radial außen ein Anlasserzahnkranz 11 angeschweißt ist. Außerdem ist an dem Eingangsteil 10 der Drehschwingungsdämpfungseinrichtung 8 eine Schwungmasse 12 befestigt. Die Schwungmasse 12 und das Eingangsteil 10 der Drehschwingungsdämpfungseinrichtung 8 bilden einen Schwingungsdämpferkäfig, in dem mehrere Energiespeichereinrichtungen, insbesondere Federeinrichtungen 16, zumindest teilweise aufgenommen sind.

In die Federeinrichtungen 16 greift ein Ausgangsteil 18 der Drehschwingungsdämpfungseinrichtung 8 ein. Das Ausgangsteil 18 der Drehschwingungsdämpfungseinrichtung 8 ist über ein Verbindungsteil 22 fest mit einem Eingangsteil 24 der Doppelkupplung 6 verbunden. Das Kupplungseingangsteil 24 ist einstückig mit einem Außenlamellenträger einer ersten Lamellen-Kupplungsanordnung 27 verbunden. Radial innerhalb des Außenlamellenträgers ist ein Innenlamellenträger der ersten Lamellen-Kupplungsanordnung 27 angeordnet. Der Innenlamellenträger ist radial innen an einem Nabenteil 30 befestigt, das über eine Verzahnung drehfest mit einer ersten Getriebeeingangswelle 31 verbunden ist, die vorzugsweise als Vollwelle ausgeführt ist.

Das Kupplungseingangsteil 24 beziehungsweise der einstückig mit dieser verbundene Außenlamellenträger der ersten Lamellen-Kupplungsanordnung 27 ist über ein Verbindungsteil 34 drehfest mit einem Außenlamellenträger einer zweiten Lamellen-Kupplungsanordnung 38 verbunden. Radial innerhalb dieses Außenlamellenträgers ist ein Innenlamellenträger der zweiten Lamellen-Kupplungsanordnung 38 angeordnet, der radial innen fest mit einem Nabenteil 41 verbunden ist. Das Nabenteil 41 ist über eine Verzahnung drehfest mit einer zweiten Getriebeeingangswelle 42 verbunden, die als Hohlwelle ausgebildet ist. In der zweiten Getriebeeingangswelle 42 ist die erste Getriebeeingangswelle 31 drehbar angeordnet. Die beiden Lamellen-Kupplungsanordnungen 27, 38 weisen eine gemeinsame Drehachse 45 auf und werden über Betätigungshebel betätigt. Zwischen dem Verbindungsteil 22 und dem Außenlamellenträger der ersten Lamellen-Kupplungsanordnung 27 ist ein Kupplungsdeckel 54 angeordnet, der radial außen an einer Kupplungsglocke 55 befestigt ist.

Zur Kühlung mindestens einer der Lamellen-Kupplungsanordnungen 27, 38 wird mittels einer Pumpe 61 ein Kühlmittelstrom bereitgestellt. Die Pumpe 61 ist in der Kupplungsglocke 55 zwischen einer Wandung der Brennkraftmaschine 3 und einer Wandung des Getriebes 5 an einen Getriebegehäuseabschnitt angebaut. Die Pumpe 61 wird in vorliegendem Beispiel ausschließlich für die Bereitstellung des Kühlmittelstroms und zur Schmierung verwendet. Bei der Pumpe 61 handelt es sich um eine Innenzahnradpumpe, insbesondere eine Gerotorpumpe. Die Innenzahnradpumpe 61 umfasst ein Hohlrad 64 mit einer Innenverzahnung, in die eine Außenverzahnung eines Sonnenrads 65 eingreift. Das Sonnenrad 65 weist einen zentralen Lagerstummel 66 auf, und ist mit einer zentralen Durchgangsbohrung versehen, die in axialer Richtung verläuft. Der Lagerstummel 66 ist in einer kreisrunden Aussparung in dem Getriebegehäuseabschnitt drehbar aufgenommen.

Die Führung des Sonnenrads 65 erfolgt durch die Anordnung desselben zwischen zwei planparallelen Flächen an dem Getriebegehäuseabschnitt und einem Pumpendeckel 68, der an dem Getriebegehäuseabschnitt befestigt ist. Radial außen ist an dem Hohlrad 64 mindestens eine Mitnehmernase ausgebildet, die in eine komplementär ausgebildete Ausnehmung eingreift, die radial innen an einem Pumpenzahnrad 69 vorgesehen ist. Das Pumpenzahnrad 69 befindet sich mit einem Antriebselement 70 in Eingriff, das vorzugsweise, ebenso wie das Pumpenzahnrad 69, mit einer Schrägverzahnung ausgestattet ist. Das Antriebselement 70 wird auch als Pumpenantriebselement oder Pumpenantriebszahnrad 70 bezeichnet. Der Antrieb des Antriebszahnrads oder Pumpenantriebselements 70 erfolgt über eine Kopplungseinrichtung 72.

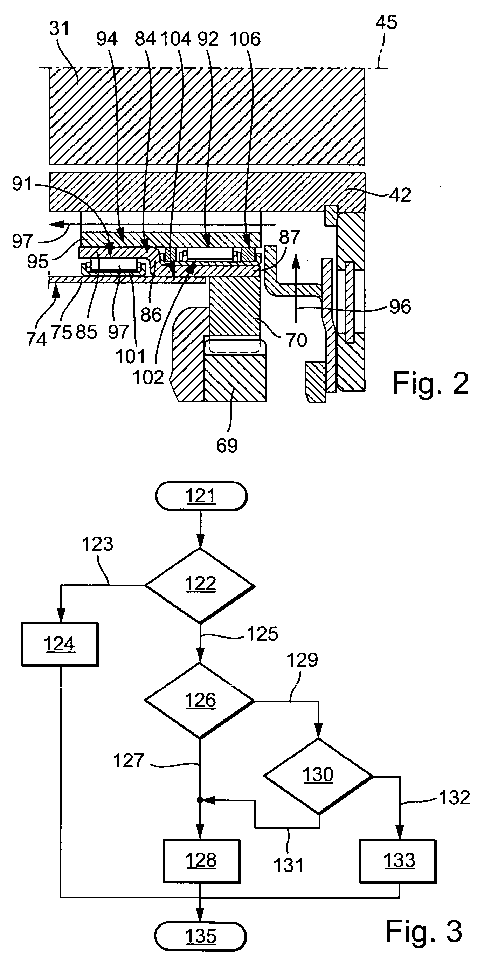

In Figur 2 ist die Pumpenantriebsanordnung mit der Kopplungseinrichtung 72 aus Figur 1 vergrößert dargestellt. Im vorliegenden Beispiel hat die Pumpe 61, die auch als Hydraulikpumpe bezeichnet wird, die Funktion einer reinen Kühlölpumpe. Es ist jedoch auch möglich, dass die Pumpe 61 als Druckversorgungseinheit einer hydraulischen Steuerung des Getriebes dient.

Bei Hybridanwendungen, in denen die elektrische Maschine, insbesondere der Elektromotor, nicht zwischen der Brennkraftmaschine, insbesondere dem Verbrennungsmotor, und dem Getriebe angeordnet wird, sondern an eine der Getriebeeingangswellen gekoppelt ist, ist bei abgeschaltetem Verbrennungsmotor und laufendem Elektromotor der Pumpenantrieb nicht sichergestellt. Im vorliegenden Beispiel ist zum Antrieb der Pumpe 61 eine erste Antriebseinrichtung 74 vorgesehen, die eine Antriebshülse 75 umfasst, die, wie man in Figur 1 sieht, über ein Verbindungsteil 76 und das Verbindungsteil 34 drehfest mit dem Kupplungseingangsteil 24 verbunden ist und so mit Motordrehzahl angetrieben ist. Die Antriebshülse oder Pumpenantriebshülse 75 ist über ein Kopplungselement 84 fest mit dem Pumpenantriebselement 70 verbunden.

Das Kopplungselement 84 umfasst einen ersten axialen Abschnitt 85, der durch einen Verbindungsabschnitt 86 einstückig mit einem zweiten axialen Abschnitt 87 verbunden ist. Der erste axiale Abschnitt 85 ist über eine erste Freilaufeinrichtung 91 mit der Antriebshülse 75 drehfest verbindbar. Die erste Freilaufeinrichtung 91 ist in einem Ringraum zwischen dem ersten axialen Abschnitt 85 des Kopplungselements 84 und der Antriebshülse 75 angeordnet. Der zweite axiale Abschnitt 87 weist einen größeren Durchmesser als der erste axiale Abschnitt 85 auf und ist über eine zweite Freilaufeinrichtung 92 mit einer Führungseinrichtung 94 drehfest verbindbar. Die zweite Freilaufeinrichtung 92 ist in einem Ringraum zwischen der Führungseinrichtung 94 und dem zweiten axialen Abschnitt 87 des Kopplungselements 84 angeordnet. Die Führungseinrichtung 94 umfasst eine Führungshülse 95. Die Führungshülse 95 ist drehfest mit der Hohlwelle 42 verbunden. Zwischen der Hohlwelle 42 und der Führungshülse 95 sind in axialer Richtung verlaufende Durchtrittskanäle ausgebildet, die, wie durch zwei Pfeile 96, 97 angedeutet ist, den Durchtritt von Kühlöl von der Pumpe (61 in Figur 1) zu den Lamellen-Kupplungsanordnungen (27, 38 in Figur 1) ermöglichen.

Durch das Kopplungselement 84 wird auf einfache Art und Weise ein doppelter Freilauf zwischen der Pumpenantriebshülse 75, der Hohlwelle 42, welche die zweite Antriebseinrichtung darstellt, und dem Pumpenantriebsrad 70 ermöglicht. Die Freiläufe sind so geschaltet, dass jeweils die schnellere der beiden Drehzahlen die Pumpe antreibt, also entweder die Drehzahl der Pumpenantriebshülse 75, die mit Motordrehzahl angetrieben ist, oder die Drehzahl der Hohlwelle 42, die durch den Elektromotor angetrieben ist. Wenn die elektrische Maschine, insbesondere der Elektromotor, an die Vollwelle 31 gekoppelt ist, dann muss zur Sicherstellung des Pumpenantriebs ein Gang vorgewählt werden, welcher der Hohlwelle 42 zugeordnet ist. Wenn sich die Pumpenantriebshülse 75 schneller als das Kopplungselement 84 dreht, dann blockiert die erste Freilaufeinrichtung 91 und überträgt das Drehmoment der Antriebshülse 75 über das Kopplungselement 84, das mit seinem zweiten axialen Abschnitt 87 in das Pumpenantriebselement 70 gepresst ist, auf das Pumpenantriebselement 70. Das Pumpenantriebselement 70 kann auch Teil der Pumpe 61 sein. Die zu den Freilaufeinrichtungen 91, 92 gehörigen Freilauframpen sind an den Stellen 101, 102 wirksam. Um die Freilaufeinrichtung 91 von Querkräften zu entlasten, ist die Pumpenantriebshülse 75 an der Stelle 104 auf dem zweiten axialen Abschnitt 87 des Kopplungselements 84 gleitgelagert.

Wenn sich die Hohlwelle 42 schneller als das Pumpenantriebszahnrad 70 dreht, dann blockiert die zweite Freilaufeinrichtung 92 und die Hohlwelle 42 überträgt ihr Drehmoment unter Zwischenschaltung der Führungseinrichtung 94 ebenfalls über das Kopplungselement 84 auf das Pumpenantriebszahnrad 70. Die radiale Lagerung des Kopplungselements 84 gegenüber der Führungseinrichtung 94 erfolgt zum Beispiel durch eine in die zweite Freilaufeinrichtung 92 beiderseits integrierte Gleitlagereinrichtung 106. Im Betrieb der in Figur 2 dargestellten Pumpenantriebsanordnung wird die jeweils nicht in Eingriff befindliche beziehungsweise blockierte Freilaufeinrichtung 91, 92 von der Drehzahl des Kopplungselements 84 überholt. Durch die erfindungsgemäße Pumpenantriebsanordnung wird der Antrieb der Pumpe 61 bei ausgeschaltetem Verbrennungsmotor durch die sich drehende Getriebeeingangswelle 42 sichergestellt. Im Stillstand eines Fahrzeugs ist keine Beölung der Kupplung notwendig, da keine Relativbewegung zwischen der Eingangs- und der Ausgangsseite auftritt.

In Figur 3 ist eine Betriebsstrategie der erfindungsgemäßen Pumpenantriebsanordnung in Form eines Flussdiagramms dargestellt. Nach dem Beginn, der mit 121 bezeichnet ist, wird in einer Verzweigung 122 überprüft, ob der Verbrennungsmotor ausgeschaltet ist. Wenn das nicht der Fall ist, dann wird, wie durch einen Pfeil 123 und ein Rechteck 124 angedeutet ist, eine nicht hybridische Betriebsstrategie verfolgt. Wenn der Verbrennungsmotor ausgeschaltet ist, dann wird, wie durch einen Pfeil 125 angedeutet ist, an einer Verzweigungsstelle 126 überprüft, ob ein Wiederstart gewünscht ist. Wenn ein Wiederstart gewünscht ist, dann wird, wie durch einen Pfeil 127 und ein Rechteck 128 angedeutet ist, die maximale Kühlölmenge bereitgestellt. Wenn kein Wiederstart gewünscht wird, wird, wie durch einen Pfeil 129 angedeutet ist, an einer Verzeigungsstelle 130 überprüft, ob die Geschwindigkeit des Fahrzeugs kleiner als eine vorgegebene Grenzgeschwindigkeit ist. Wenn die Fahrzeuggeschwindigkeit kleiner als die Grenzgeschwindigkeit ist, dann wird, wie durch einen Pfeil 131 und das Rechteck 128 angedeutet ist, die maximale Kühlölmenge bereitgestellt. Wenn die Fahrzeuggeschwindigkeit nicht kleiner als die Grenzgeschwindigkeit ist, dann wird, wie durch einen Pfeil 132 und ein Rechteck 133 angedeutet ist, eine leistungsabhängige Kühlölmenge bereitgestellt. Das dem Beginn 121 zugeordnete Ende ist mit 135 bezeichnet.

In Wiederstartsituationen richtet sich die Ansteuerung der elektrischen Maschine und damit die Drehzahl der die Pumpe antreibenden Eingangswelle des Getriebes nicht nach dem Kühlölbedarf, sondern sie dient ausschließlich dem schnellen und komfortablen Wiederstart des Verbrennungsmotors und dem Aufbau der Fahrzeugbeschleunigung. Da es in diesen Betriebszuständen aber zu einem nennenswerten Leistungseintrag in die Kupplung kommen kann, ist es wichtig, zu Beginn des Wiederstarts noch einen guten Beölungszustand der Kupplung zu haben. Um dies zu erreichen, wird vorgeschlagen, in Verzögerungsphasen mit abgeschaltetem Verbrennungsmotor unterhalb einer parametrierbaren Grenzgeschwindigkeit die maximale Kühlölmenge zu den Kupplungen zu schicken. Gleiches gilt für die Dauer des Wiederstartvorgangs. Das wird vorzugsweise durch eine gesteuerte Entdrosselung auf der Ansaugseite der Kühlölpumpe erreicht.

**Bezugszeichenliste**

| | |
|---|---|
| 1. Antriebsstrang | 70. Pumpenantriebselement |
| 3. Antriebseinheit | 72. Kopplungseinrichtung |
| 4. Kurbelwelle | 74. erste Antriebseinrichtung |
| 5. Getriebe | 75. Antriebshülse |
| 6. Doppelkupplung | 76. Verbindungsteil |
| 8. Drehschwingungsdämpfungseinrichtung | 84. Kopplungselement |
| 9. Schraubverbindung | 85. erster axialer Abschnitt |
| 10. Eingangsteil | 86. Verbindungsabschnitt |
| 11. Anlasserzahnkranz | 87. zweiter axialer Abschnitt |
| 12. Schwungmasse | 91. erste Freilaufeinrichtung |
| 16. Federeinrichtung | 92. zweite Freilaufeinrichtung |
| 18. Ausgangsteil | 94. Führungseinrichtung |
| 22. Verbindungsteil | 95. Führungshülse |
| 24. Kupplungseingangsteil | 96. Pfeil |
| 27. erste Lamellen-Kupplungsanordnung | 97. Pfeil |
| 30. Nabenteil | 101. Stelle |
| 31. erste Getriebeeingangswelle | 102. Stelle |
| 34. Verbindungsteil | 104. Stelle |
| 38. zweite Lamellen-Kupplungsanordnung | 106. Gleitlagereinrichtung |
| 41. Nabenteil | 121. Beginn |
| 42. zweite Getriebeeingangswelle | 122. Verzweigung |
| 45. Drehachse | 123. Pfeil |
| 54. Kupplungsdeckel | 124. Rechteck |
| 55. Kupplungsglocke | 125. Pfeil |
| 61. Pumpe | 126. Verzweigungsstelle |
| 64. Hohlrad | 127. Pfeil |
| 65. Sonnenrad | 128. Rechteck |
| 66. Lagerstummel | 129. Pfeil |
| 68. Pumpendeckel | 130. Verzweigungsstelle |
| 69. Pumpenzahnrad | 131. Pfeil |
| | 132. Pfeil |
| | 133. Rechteck |
| | 135. Ende |

## Patentansprüche

1. Pumpenantriebsanordnung mit einem Pumpenantriebselement (70), das durch eine erste oder eine zweite Antriebseinrichtung angetrieben ist, wobei das Pumpenantriebselement (70) durch ein Kopplungselement (84) entweder über eine erste Freilaufeinrichtung (91) mit der ersten Antriebseinrichtung oder über eine zweite Freilaufeinrichtung (92) mit der zweiten Antriebseinrichtung drehfest verbindbar beziehungsweise verbunden ist, wobei die erste Freilaufeinrichtung (91) dann blockiert, wenn sich die erste Antriebseinrichtung schneller als das Kopplungselement (84) dreht und die zweite Freilaufeinrichtung (92) dann blockiert, wenn sich die zweite Antriebseinrichtung schneller als das Kopplungselement (84) dreht, wobei das Kopplungselement (84) eine Kopplungshülse mit einem ersten axialen Abschnitt (85) und einem zweiten axialen Abschnitt (87) umfasst, wobei der erste axiale Abschnitt (86) mit der ersten Freilaufeinrichtung (91) und der zweite axiale Abschnitt (87) mit der zweiten Freilaufeinrichtung (92) zusammenwirkt, wobei die zweite Antriebseinrichtung drehfest mit einer Getriebeeingangswelle verbunden ist, **dadurch gekennzeichnet, dass** die erste Antriebseinrichtung eine Antriebshülse (75) umfasst, die über die erste Freilaufeinrichtung (91) drehfest mit dem Kopplungselement (84) verbindbar beziehungsweise verbunden ist und durch eine Lagereinrichtung querkraftfrei an dem Kopplungselement (84) gelagert ist, wobei die Antriebshülse als Blechteil ausgeführt und koaxial zu der Getriebeeingangswelle angeordnet ist.

2. Pumpenantriebsanordnung nach Anspruch 1, **dadurch gekennzeichnet, dass** die beiden Freilaufeinrichtungen (91,92), relativ zu dem Kopplungselement (84), in entgegengesetzten Drehrichtungen wirksam sind.

3. Pumpenantriebsanordnung nach einem der vorhergehenden Ansprüche, **dadurch gekennzeichnet, dass** die beiden axialen Abschnitte unterschiedlich große Durchmesser haben.

4. Pumpenantriebsanordnung nach einem der vorhergehenden Ansprüche, **dadurch gekennzeichnet, dass** die zweite Antriebseinrichtung drehfest mit einer Getriebeeingangswelle (42), insbesondere einer Getriebehohlwelle, verbunden ist.

5. Pumpenantriebsanordnung nach Anspruch 4, **dadurch gekennzeichnet, dass** die Getriebeeingangswelle (42) drehfest mit einer Führungseinrichtung (94) für ein Kühl- und/oder Schmiermedium verbunden ist, die relativ zu dem Kopplungselement (84) drehbar ist.

6. Pumpenantriebsanordnung nach einem der vorhergehenden Ansprüche, **dadurch gekennzeichnet, dass** die Lagereinrichtung eine Gleitlagereinrichtung ist.

7. Pumpenantriebsanordnung nach einem der vorhergehenden Ansprüche, **dadurch gekennzeichnet, dass** das Kopplungselement (84) drehfest mit dem Pumpenantriebselement (70) verbunden ist.

8. Pumpenantriebsanordnung nach einem der vorhergehenden Ansprüche, **dadurch gekennzeichnet, dass** ein von einer mit dem Pumpenantriebselement (70) angetriebenen Pumpe (61) erzeugter Volumenstrom mittels einer Saugdrosselung geregelt wird.

9. Hybridfahrzeugantriebsstrang mit einer elektrischen Maschine, einer Brennkraftmaschine (3) und einem Getriebe (5), insbesondere einem Doppelkupplungsgetriebe, mit mindestens einer Getriebeeingangswelle (42) und mit einer Pumpenantriebsanordnung nach einem der vorhergehenden Ansprüche.

## Claims

1. Pump drive arrangement having a pump drive element (70) which is driven by a first or a second drive device, wherein the pump drive element (70) is, by way of a coupling element (84), connectable or connected rotationally conjointly either via a first freewheel device (91) to the first drive device or via a second freewheel device (92) to the second drive device, wherein the first freewheel device (91) enters a blocked state when the first drive device rotates faster than the coupling element (84) and the second freewheel device (92) enters a blocked state when the second drive device rotates faster than the coupling element (84), wherein the coupling element (84) comprises a coupling sleeve with a first axial section (85) and with a second axial section (87), wherein the first axial section (85) interacts with the first freewheel device (91) and the second axial section (87) interacts with the second freewheel device (92), wherein the second drive device is connected rotationally conjointly to a gearbox input shaft, **characterized in that** the first drive device comprises a drive sleeve (75) which is connectable or connected rotationally conjointly to the coupling element (84) by way of the first freewheel device (91) and which is mounted on the coupling element (84), so as to be free from transverse forces, by way of a bearing device, wherein the drive sleeve is in the form of a sheet-metal part and is arranged coaxially with respect to the gearbox input shaft.

2. Pump drive arrangement according to Claim 1, **characterized in that** the two freewheel devices (91, 92) act in opposite directions of rotation relative to the coupling element (84).

3. Pump drive arrangement according to one of the preceding claims, **characterized in that** the two axial sections are of different diameter.

4. Pump drive arrangement according to one of the preceding claims, **characterized in that** the second drive device is connected rotationally conjointly to a gearbox input shaft (42), in particular to a gearbox hollow shaft.

5. Pump drive arrangement according to Claim 4, **characterized in that** the gearbox input shaft (42) is connected rotationally conjointly to a guide device (94) for a cooling and/or a lubricating medium, which guide device is rotatable relative to the coupling element (84).

6. Pump drive arrangement according to one of the preceding claims, **characterized in that** the bearing device is a plain bearing device.

7. Pump drive arrangement according to one of the preceding claims, **characterized in that** the coupling element (84) is connected rotationally conjointly to the pump drive element (70).

8. Pump drive arrangement according to one of the preceding claims, **characterized in that** volume flow generated by a pump (51) which is driven the pump drive element (70) is regulated by way of a suction throttle arrangement.

9. Hybrid vehicle drivetrain having an electric machine, having an internal combustion engine (3) and having a gearbox (5), in particular a double-clutch gearbox, having at least one gearbox input shaft (42) and having a pump drive arrangement according to one of the preceding claims.

## Revendications

1. Agencement d'entraînement de pompe comprenant un élément d'entraînement de pompe (70) qui est entraîné par un premier et/ou un deuxième dispositif d'entraînement, l'élément d'entraînement de pompe (70) pouvant être connecté ou étant connecté de manière solidaire en rotation par un élément d'accouplement (84) soit par le biais d'un premier dispositif de roue libre (91) au premier dispositif d'entraînement soit par le biais d'un deuxième dispositif de roue libre (92) au deuxième dispositif d'entraînement, le premier dispositif de roue libre (91) se bloquant si le premier dispositif d'entraînement tourne plus vite que l'élément d'accouplement (84) et le deuxième dispositif de roue libre (92) se bloquant si le deuxième dispositif d'entraînement tourne plus vite que l'élément d'accouplement (84), l'élément d'accouplement (84) comprenant une douille d'accouplement avec une première portion axiale (85) et une deuxième portion axiale (87), la première portion axiale (85) coopérant avec le premier dispositif de roue libre (91) et la deuxième portion axiale (87) coopérant avec le deuxième dispositif de roue libre (92), le deuxième dispositif d'entraînement étant connecté de manière solidaire en rotation à un arbre d'entrée de boîte de vitesses, **caractérisé en ce que** le premier dispositif d'entraînement comprend une douille d'entraînement (75) qui peut être connectée ou qui est connectée de manière solidaire en rotation par le biais du premier dispositif de roue libre (91) à l'élément d'accouplement (84) et qui est supportée par un dispositif de palier sans force transversale sur l'élément d'accouplement (84), la douille d'entraînement étant réalisée sous forme de pièce en tôle et étant disposée coaxialement à l'arbre d'entrée de boîte de vitesses.

2. Agencement d'entraînement de pompe selon la revendication 1, **caractérisé en ce que** les deux dispositifs de roue libre (91, 92) agissent par rapport à l'élément d'accouplement (84) dans des sens de rotation opposés.

3. Agencement d'entraînement de pompe selon l'une quelconque des revendications précédentes, **caractérisé en ce que** les deux portions axiales présentent des diamètres différents.

4. Agencement d'entraînement de pompe selon l'une quelconque des revendications précédentes, **caractérisé en ce que** le deuxième dispositif d'entraînement est connecté de manière solidaire en rotation à un arbre d'entrée de boîte de vitesses (42), en particulier un arbre creux de boîte de vitesses.

5. Agencement d'entraînement de pompe selon la revendication 4, **caractérisé en ce que** l'arbre d'entrée de boîte de vitesses (42) est connecté de manière solidaire en rotation à un dispositif de guidage (94) pour un fluide de refroidissement et/ou de lubrification, le dispositif de guidage pouvant tourner par rapport à l'élément d'accouplement (84).

6. Agencement d'entraînement de pompe selon l'une quelconque des revendications précédentes, **caractérisé en ce que** le dispositif de palier est un dispositif de palier lisse.

7. Agencement d'entraînement de pompe selon l'une quelconque des revendications précédentes, **caractérisé en ce que** l'élément d'accouplement (84) est connecté de manière solidaire en rotation à l'élément d'entraînement de pompe (70).

8. Agencement d'entraînement de pompe selon l'une quelconque des revendications précédentes, **caractérisé en ce qu'**un débit volumique généré par une pompe (61) entraînée avec l'élément d'entraînement de pompe (70) est régulé au moyen d'un étranglement d'aspiration.

9. Chaîne cinématique pour un véhicule hybride comprenant une machine électrique, un moteur à combustion interne (3) et une boîte de vitesses (5), en particulier une boîte de vitesses à double embrayage, comprenant au moins un arbre d'entrée de boîte de vitesses (42) et un agencement d'entraînement de pompe selon l'une quelconque des revendications précédentes.
